# EUROPEAN PATENT SPECIFICATION

(11) **EP 3 871 401 B1**
(45) Date of publication and mention of the grant of the patent: **17.04.2024**
(21) Application number: 19875959.9
(22) Date of filing: 25.10.2019
(51) Int. Cl.: H04L 61/4511, H04L 9/40, H04L 67/1021, H04L 61/4552

(54) **DNS EVERYWHERE**
DNS EVERYWHERE
DNS OMNIPRÉSENT

(30) Priority: 26.10.2018 US 201862751318 P; 05.11.2018 US 201862755904 P
(43) Date of publication of application: 01.09.2021
(73) Proprietor: Akamai Technologies, Inc., Cambridge, MA 02142 (US)
(72) Inventor: PAYNE, John, Cambridge, MA 02142 (US); GERO, Charles, E., Cambridge, MA 02142 (US); TANG, David, Cambridge, MA 02142 (US)
(74) Representative: TLIP Limited
(86) International application number: PCT/US2019/058143
(87) International publication number: WO 2020/087002

(56) References cited:
- EP-A2- 2 235 885
- JP-A- 2007 189 540
- US-A- 6 108 703
- US-A1- 2006 116 988
- US-A1- 2010 306 409
- US-A1- 2011 032 833
- US-A1- 2011 093 522
- US-A1- 2013 179 551
- US-A1- 2013 279 414
- US-A1- 2016 036 857
- US-A1- 2018 270 201
- US-A1- 2018 331 947
- US-B1- 7 228 359

## Description

### CROSS REFERENCE TO RELATED APPLICATIONS

This application is based on, and claims the benefit of priority to US Application Numbers 62/751,318, filed October 26 2018, and 62/755,904, filed November 5 2018.

### BACKGROUND

### Technical Field

This application relates generally to DNS and also to the delivery of software as a service (SaaS) applications in enterprise networks.

### Brief Description of the Related Art

Enterprises are increasingly shifting their networks away from the classic hub and spoke architecture, wherein all branch office traffic must backhaul to centralized data centers, to a more modern hybrid topology where branch offices include direct Internet access in their connectivity suite.

Such an architecture has numerous advantages. First, branch office Internet uplinks are often much cheaper to provision and maintain than dedicated infrastructure back to the data center. Even in cases where a MPLS line (Multiprotocol Label Switching) is still desired, the overall price an enterprise pays can be drastically reduced as Internet bound traffic can egress directly, thus freeing up bandwidth on the more expensive MPLS line for mission critical workloads local to the data center.

In addition, Internet uplinks tend to be quicker to deploy in new branch locations. Many times, they can be provisioned within days or even hours without running expensive local loops. In some cases, the ease of deployment is also coupled with multiple providers which further pressure pricing downward and, when used in combination with technologies like SD-WAN, increase robustness to failure.

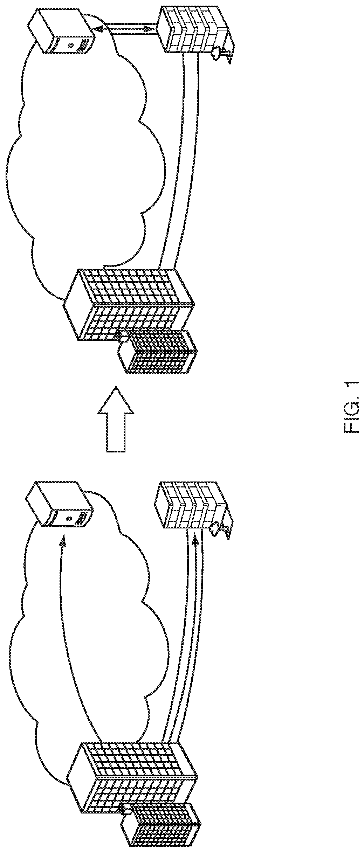

Finally, such architectures are often much faster as they avoid the traditional hairpin effect seen when backhauling all traffic, as illustrated by FIG 1. As shown in FIG. 1, on the left hand side, in order for the branch office to reach the Internet application server, it must send its traffic through the central data center and then back toward the server, despite the fact that it (i.e., the branch office) is closer in proximity to the application. In the transitioned hybrid network on the right, we see the addition of an Internet uplink allows direct access to the application with the absence of hairpinning. In fact, the promise of faster SaaS access is often the greatest accelerator of change in this area.

Yet, with all of the benefits that come with a hybrid network, there is one group of use cases that often suffers: globally distributed Software as a Service (SaaS) environments. But how could this be? Part of the economic driver for moving to direct Internet is to enable such technologies to be as fast as possible. To understand, we must delve into the world of distributed systems and geolocation mapping.

Large SaaS providers do not exist in one central location. For a variety of reasons including performance and compliance around data residency, such providers are distributed across dozens to sometimes thousands of locations around the world.

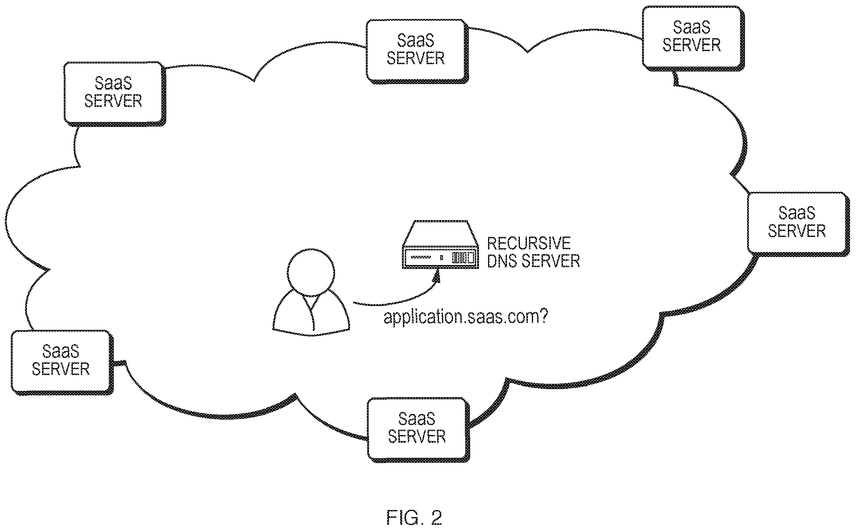

When a user wishes to access one of these services, it is most performant to be mapped to the Point of Presence, or POP, closest to them. In order to facilitate this, many providers make use of an interesting trick on top of the DNS protocol. When a user attempts to access a domain name such as application.saas.com (a real-world example might be outlook.office365.com), their local machine asks a recursive DNS resolver that has been assigned to them either manually or through DHCP to lookup the associated IP address for them. (The DNS lookup is shown in FIG. 2.)

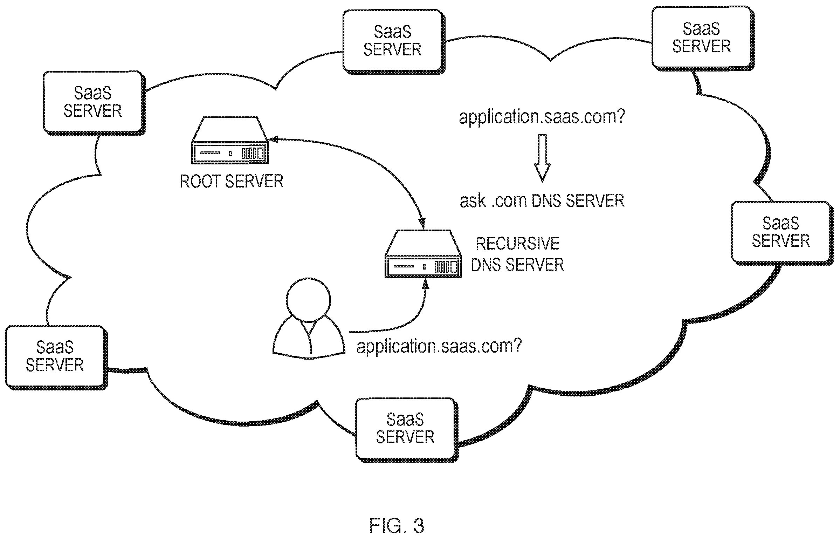

This recursive DNS resolver starts out by asking special machines on the Internet known as root servers if they know who application.saas.com is. These servers do not know the answer directly, but they do know who to ask about all .com addresses. Instead of returning an answer for application.saas.com, they return the address of a server that can authoritatively answer requests about *.com. This root server answer step is shown in FIG. 3.

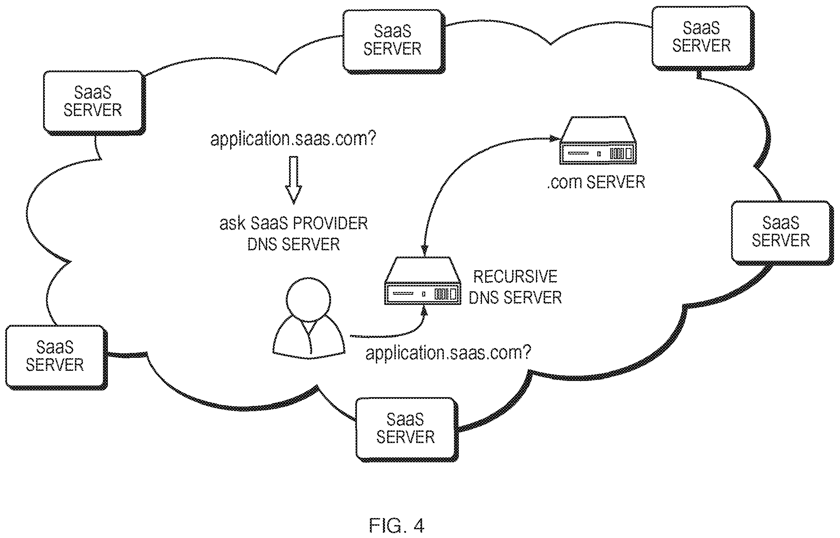

The recursive resolver dutifully follows this instruction and asks the given .com server if it knows who application.saas.com is. This server does not know the answer either, but like the root server, it has enough information about who to ask next: a SaaS provider DNS Server responsible for the SaaS service (e.g., if the name were outlook.office365.com, then the SaaS provider might be Microsoft and the SaaS service might be Office 365). This .com server answer step is shown in FIG. 4.

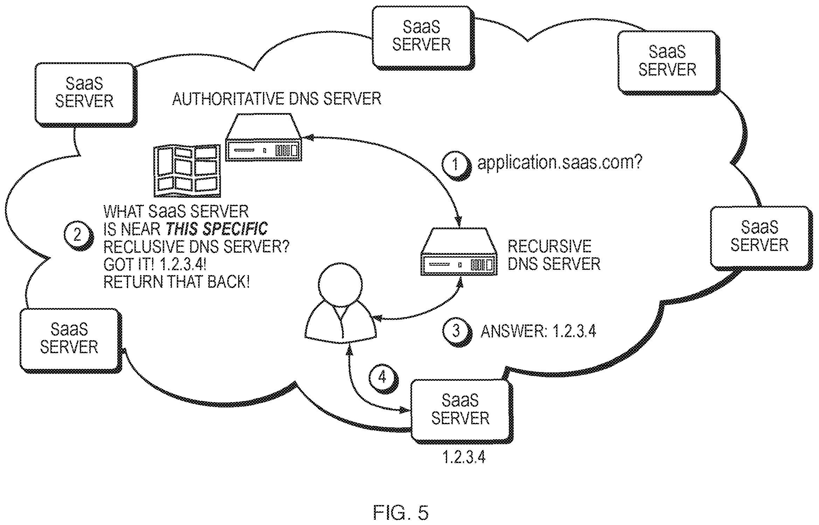

This system of referrals is how domain names are resolved to IP addresses on the Internet, and is known as DNS recursion. Under normal operation, once reaching the authoritative DNS server, that server would simply return the IP address or addresses of the machines associated with the domain name. But in the case of systems like a SaaS service, there could be hundreds or thousands of machines. How do SaaS providers know which IP address to return? They can do this using a trick known as geolocation, which is shown in FIG. 5.

With reference to FIG. 5, in step 1, the end user's Recursive DNS Server sends the query for application.saas.com to the authoritative SaaS provider DNS server. In step 2, that DNS server examines the source IP address of the Recursive DNS Server making the query. It compares this IP address with a map of the Internet that tells it which of its servers are closest to that specific source IP. At that point, it returns the IP address of the closest server back to the Recursive DNS Server. In step 3, the Recursive DNS Server passes that IP address back to the end user, who then connects to it in step 4.

By doing this, major SaaS vendors (and CDNs), attempts to connect users with the machines that are closest to them. Notice, however, that the location aware response that was returned was based on the source IP address of the Recursive DNS Server, not the end user.

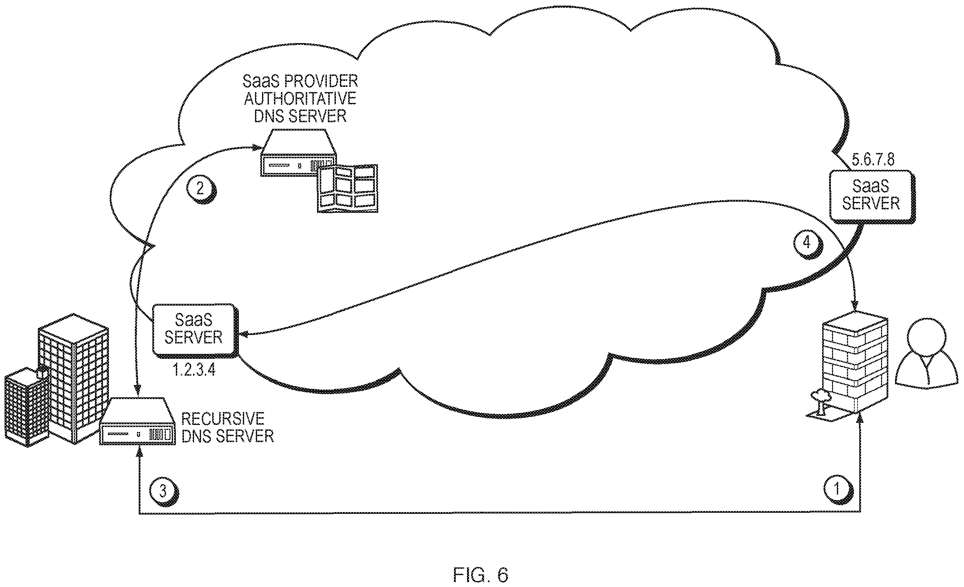

In many cases this is a reasonable approximation as users tend to live (i.e., be located) close to their DNS resolvers. But it is this very assumption that often causes many hybrid networks to fail. But why? As seen in FIG. 1, many companies are beginning to add an Internet uplink to their branch offices in order to avoid backhauling Internet bound traffic into their data centers. At the same time, their data centers contain DNS servers such as Infoblox and Active Directory (AD) which are responsible for returning addresses of internal machines and printers. As a result, many companies mistakenly view DNS as an internal protocol which should continue to be backhauled. This leads to a problem where the most critical systems that companies are attempting to increase performance for, distributed SaaS applications, end up performing far worse. An example is shown in FIG. 6

In FIG. 6, there is shown a branch office on the right that has direct Internet access as well as an MPLS link back to the data center on the left. Additionally, the network administrator has configured all branch office DNS lookups to backhaul over the MPLS link so internal resolutions for resources such as printers and file shares work. In step 1, when a user in the branch office wishes to connect to an external site such as application.saas.com, the user (i.e., via the user's client device) generates a DNS request destined for the configured Recursive DNS Server in the data center. This packet travels over the MPLS line until it reaches the given server, which in step 2 performs the geolocation aware recursive lookups described earlier in this document. The SaaS Provider's Authoritative DNS Server examines the source IP address of the query sent from the data center Recursive DNS Server and assumes that the user is nearby that location. As such, it returns the IP address of the SaaS server nearest to the data center itself, which is 1.2.3.4 in the diagram shown in FIG. 6. In step 3, the data center Recursive DNS Server returns this address back to the user who made the original query. Finally, in step 4, the user attempts to reach this address, and since the IP is external, utilizes the Internet facing link.

The problem in this scenario is simple: the assumption that the user would be located in close proximity to his or her data center was incorrect. Because of this, the user in the branch office ends up contacting the 1.2.3.4 server which is located far away, as opposed to the 5.6.7.8 server which is nearby. This often results in performance which is far worse than prior to the direct Internet breakout being added to the branch, as the user must now contend with a long haul path across the bare Internet to 1.2.3.4, where in the past they could at least rely on near lossless MPLS. In this way, the combination of Geolocation, DNS Backhauling, and Direct Internet Breakouts all align to produce a very suboptimal solution. US2013/179551A1 discloses a method including receiving an address of a DNS server of a network and a secure communication tunnel established with a client of the network. The client is notified that requests to the address of the DNS server of the network should not pass through the secure communication tunnel. A request for a DNS lookup of a name of a host of the network is received through the secure communication tunnel. A DNS referral that includes the address of the DNS server of the network is sent to the client.

It is an object of this invention to ameliorate the aforementioned performance problems. It is also an object of this invention to provide a solution in a way that does not compromise the security or privacy of enterprise operations.

### BRIEF SUMMARY

The following is merely a brief summary of aspects of the teachings hereof. It is not limiting as the claims alone define the scope of legal protection that is sought.

According to the invention, there is provided a system according to claim 1. The system includes an enterprise network comprising an enterprise DNS server and an end user client, the end user client being located remote from the enterprise DNS server. In this system, the end user client is configured to direct a DNS request, the DNS request being a request to resolve a hostname, directly onto the public Internet to a DNS service platform operated by a service provider on behalf of the enterprise, the DNS service platform comprising a plurality of platform DNS servers distributed around the Internet. The system includes a first platform DNS server configured to receive the DNS requests at an IP address. Upon a determination that the hostname is an internal hostname of the enterprise, based on an internal configuration at the first platform DNS server, the first platform DNS server forwards the end user client's DNS request to a second platform DNS server located closer to the enterprise DNS server, wherein said closeness is measured by any of geographic and network distance. The second platform DNS server relays the end user client's DNS request to the enterprise DNS server via a secure tunnel through the enterprise network perimeter, the secure tunnel having been established between the second platform DNS server and machine executing software, the software provided by the service provider to the enterprise for the purpose of establishing the secure tunnel. In this system, the enterprise DNS server is configured to receive the end user client's DNS request, which is for internal hostname, and generate a DNS answer, which is returned to the end user client via the secure tunnel, the second platform DNS server, and the first platform DNS server.

In the system just described above, the first platform DNS server can authenticate/authorize the end user client before forwarding the DNS request. Also, the end user client can be located in a branch office and has connectivity to the enterprise DNS server via a private link. Further, the particular platform DNS server can be configured to receive the DNS request at the IP address and the IP address is an AnyCast IP address. Also, the internal hostname can correspond to an enterprise file server or enterprise application. And, the network enterprise perimeter can comprise a firewall.

The particular platform DNS server may be selected to be located outside of a given geographic area where the end user client is located.

In the system just described, the given geographic area can be a given country. Also, the authoritative DNS server can be for a SaaS provider or for a public website.

### BRIEF DESCRIPTION OF THE DRAWINGS

The invention will be more fully understood from the following detailed description taken in conjunction with the accompanying drawings, in which:
FIG. 1 is a diagram illustrating how a transition to hybrid architecture removes connection hairpins, as is known in the prior art;
FIG. 2 is a diagram illustrating a DNS lookup for a SaaS, as known in the prior art;
FIG. 3 is a diagram that illustrates a root server answer steps in a DNS lookup, as known in the prior art;
FIG. 4 is a diagram that illustrates a .com server answer step in a DNS lookup, as known in the prior art;
FIG. 5 is a diagram that illustrates geolocation, as known in the prior art;
FIG. 6 is a diagram that illustrates a company backhauled DNS, as known in the prior art, which leads to problems;
FIG. 7 is a diagram that illustrates one embodiment of an architecture for DNS Everywhere;
FIG. 8 is a diagram that illustrates the steps involved in a DNS Everywhere DNS lookup for an external domain name (i.e., external to the company);
FIG. 9 illustrates the steps involved in a DNS Everywhere DNS lookup for an internal domain name (i.e., external to the company);
FIG. 10 is a sequence diagram illustrating the lookup of an internal domain name;
FIG. 11 is a diagram illustrating an example DNS Everywhere external lookup for remotely deployed DNS Everywhere resolver node; and,
FIG. 12 is a diagram illustrating an example DNS Everywhere internal lookup for remotely deployed DNS Everywhere resolver node;

### DETAILED DESCRIPTION

The following detailed description provides non-limiting embodiments of the invention. The claims alone define the scope of protection of this patent document; the claims are incorporated by reference herein.

To solve the technical problem(s) identified in the Background, a new service called DNS Everywhere is introduced and described, in this section. This unique solution can leverage Akamai's (that is, a content delivery network or CDN's) massive global footprint to provide special Recursive DNS Servers with close proximity to company branch offices. This close locality overcomes the pessimal backhaul problems described earlier and provides improved geolocation for all services on the Internet.

In addition, through the installation of an intelligent piece of software in the data center, these special Recursive DNS servers are capable of performing internal resolutions without storing sensitive company records in the cloud.

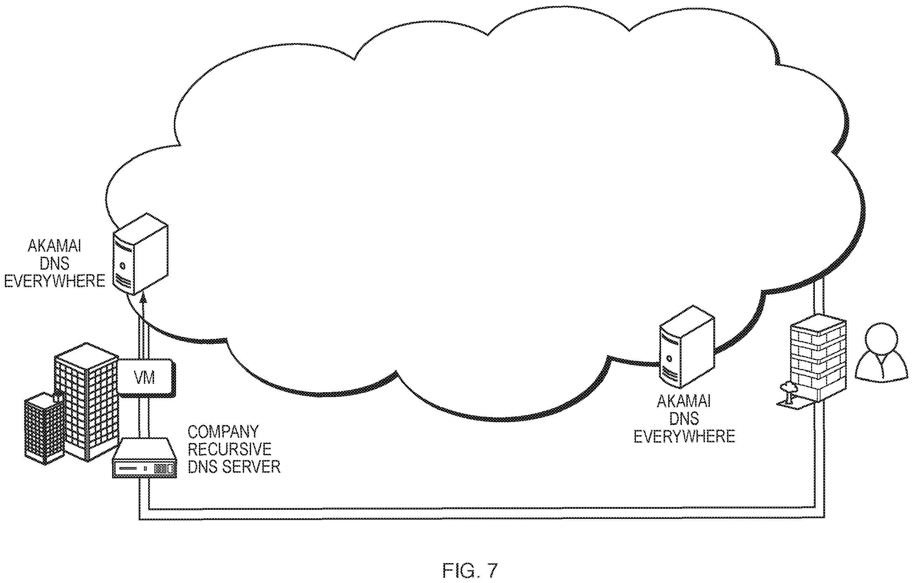

FIG. 7 shows the DNS Everywhere architecture at a high level. FIG. 7 shows the addition of Akamai DNS Everywhere nodes (also referred to simply as "DNS Everywhere" nodes). These nodes are DNS servers and part of the vast global (Akamai, or CDN) network of machines geographically distributed around the world. The goal is that no matter where a company's branch offices or data centers are, there is a DNS Everywhere node nearby.

Additionally, we see the presence of a VM in the corporate data center. This VM, also known as the Akamai Connector or simply "Connector", is the intelligent piece of software mentioned earlier that enables the internal lookups of domains in a highly secure fashion.

Upon starting the Connector, it will attempt to obtain an IP address over DHCP and then dial out to a DNS Everywhere node (indicated by the arrow from VM to the closest DNS Everywhere node) over port 443. This intuitive design means that companies need not open any firewall rules or add the VM to their DMZ. Instead, all requests for internal domains will be reverse tunneled back into the Connector from the secure Akamai cloud (i.e., the DNS Everywhere network).

To see how this fixes the problems discussed earlier, consider again the example of accessing the SaaS provider, but now utilizing this innovative solution.

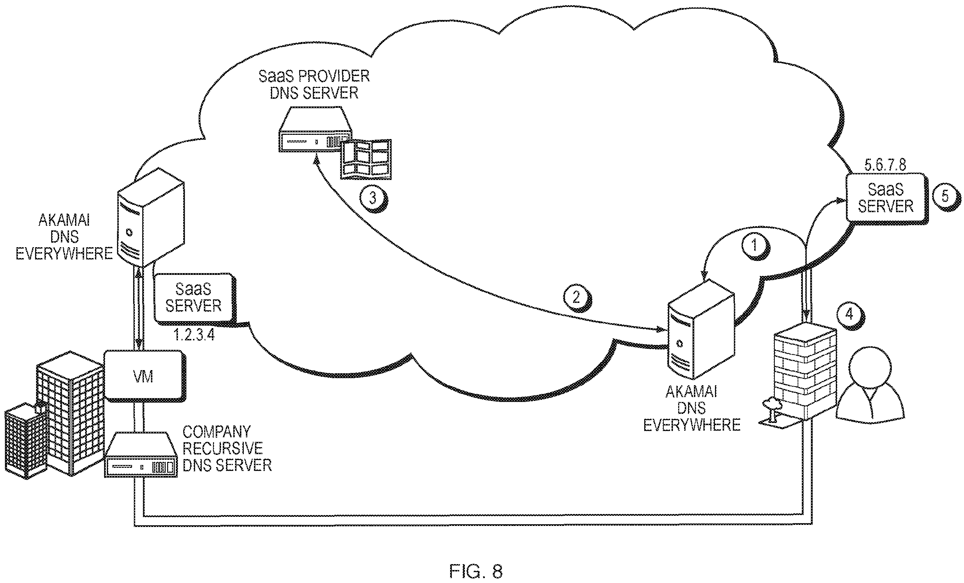

With reference to FIG. 8, in step 1, the user (via a client device) makes a DNS request to their configured Recursive DNS Server, which in this case is a DNS Everywhere machine, for a domain such as 'application.saas.com'. This request reaches the DNS Everywhere Machine through an Anycast address assigned to them (by Akamai, the CDN) which ensures that users within the given branch office access a DNS Everywhere node very near to them.

In step 2, this DNS Everywhere machine does the full recursive DNS lookup just as described earlier in this document, eventually reaching the authoritative SaaS Authoritative DNS Server. That server examines the source IP address of the request packet in order to perform geolocation, but instead of the request coming from the data center as it did in the earlier example, it now comes from the DNS Everywhere node with close proximity to the requesting user. As such, the SaaS Authoritative DNS Server maps the user to the SaaS node nearest the DNS Everywhere server the branch office is utilizing.

In step 3, the SaaS Authoritative DNS Server returns the IP address of the nearest DNS Everywhere, 5.6.7.8 in our example, to the DNS Everywhere machine, which forwards the answer back to the original user in step 4.

Finally, in step 5, the user connects to the closest SaaS node at 5.6.7.8, instead of the poor performing and far reaching node nearest the data center.

One unique feature of this solution is that the end users in the company branch offices always utilize the nearest DNS Everywhere resolvers to do lookups on their behalf, thus ensuring any service that does geolocation maps their requests to nearby machines. Akamai's (i.e., the CDN's) vast global network of machines capable of servicing DNS requests helps this work well.

The level of performance that can be achieved by enabling SaaS providers to accurately geolocate a customer's end users is thereby enhanced.

The benefits for external lookups are patently clear, but what about internal lookups such as servers and printers that live within the data center (i.e., the data center of the company)? In the past, these DNS queries, along with all other queries, were directed into the corporate recursive DNS server where they could easily be answered. Now that all queries go to the (external) DNS Everywhere network, how can internal lookups be performed?

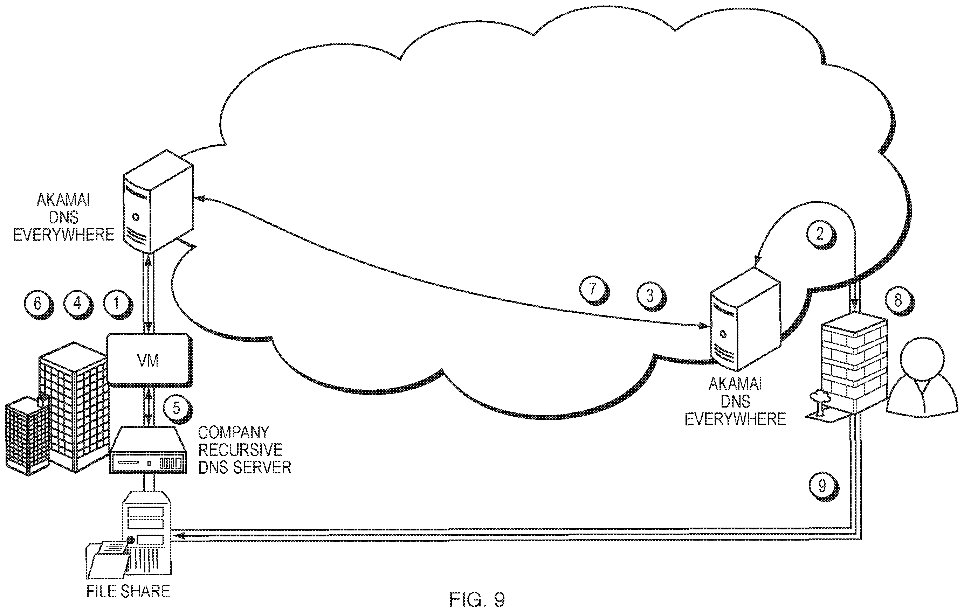

Let's examine this use case next with an example involving a file share in the data center, and reference to FIG. 9.

FIG. 9 illustrates the addition of a file share located at the data center. As mentioned earlier, in step 1 the Connector makes an outbound connection to an DNS Everywhere entry node located closest to the data center. This connection will remain open (i.e. persistent connection) and serve as an encrypted and authenticated reverse DNS tunnel into the corporate network for the purpose of internal DNS resolutions.

In step 2, a user (i.e., using a client device) in a branch office attempts to do a lookup for the internal file share domain name. As before, their DNS request egresses onto the Internet and reaches a nearby DNS Everywhere server. This server detects that the domain name being requested is internal through a preconfigured pattern match and authenticates/authorizes that the user is allowed to make this internal query by matching their source IP address to a list of known branch office CIDRs. If the user is not coming from an authorized branch office CIDR, the request is dropped.

In step 3, assuming the user is coming from an authorized branch office, the request is forwarded securely through the network to the DNS Everywhere entry node mentioned in step 1. This entry node receives the request, and in step 4, sends it down the secure reverse DNS tunnel into the Connector.

In step 5, the Connector asks the local corporate Recursive DNS Resolver located in the data center for the associated answer to the query. In step 6, upon receiving the answer, the Connector forwards it back to the DNS Everywhere entry node over the encrypted reverse tunnel.

In step 7, the DNS Everywhere entry node forwards the answer back to the originating DNS Everywhere machine nearest the branch office, which in step 8 sends the answer back to the original user.

Finally, in step 9, the user connects to the file share server, utilizing for example, an MPLS path or VPN into the data center.

### Additional Benefits

Other than providing locality of mapping for the most mission critical SaaS and CDN services, and allowing secure access to internal domain name lookups, DNS Everywhere can also provide a number of other benefits.

### Caching

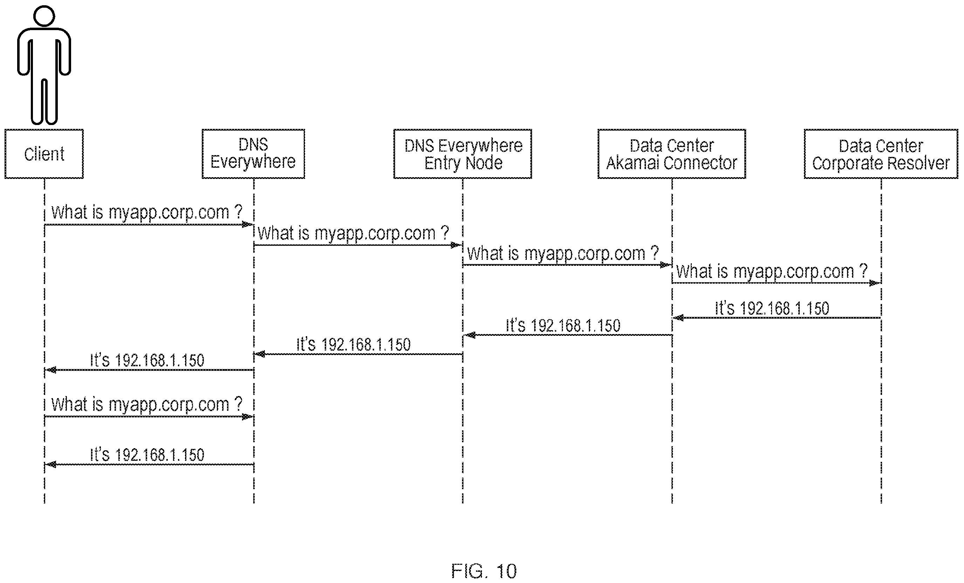

All responses can be optionally cached at the DNS Everywhere machines closest to the branch. An example time sequence diagram for this is shown in FIG. 10 for an internal lookup

In the first sequence (i.e., the first request to resolve myapp.corp.com), FIG. 10 shows see that the internal request flows completely back into the data center, as described in this section of the document. However, on the subsequent request (i.e,. second request to resolve myapp.corp.com), FIG. 10 shows that the response is delivered directly from cache, providing a potentially huge speed increase for DNS resolutions.

This caching can be enabled or disabled for both internal and external domain names.

### Off-Net Support

DNS Everywhere can provide a lightweight client that enables access to internal domains and best in class geographic mapping for employees who are off-premise. This will enable improved SaaS performance while still providing access to internal resources for travelers and remote employees alike.

### Advanced Intra-Region Mapping

Not only can the DNS Everywhere approach provide improved mapping for SaaS services based on geolocation, it can also be used to further refine the mapping by returning only those IP addresses within a specific data center or geography that are most performant.

As an example, when DNS Everywhere (that is, a DNS Everywhere node) queries a SaaS Provider for its closest SaaS servers on behalf of a user in geographic region, the SaaS typically responds with not only one IP address, but the set of all serviceable addresses within that region. Some of these IP addresses reside on networks that might not have great connectivity with the requesting branch office network.

That list of IP addresses returned can display a wide range of latency characteristics (that is, the latency of the network traffic sent to those IP addresses can have a wide range of latency). DNS Everywhere is able to not only allow the SaaS provider to discover the proper geographic region to map to, but can also determine out of the set of all IP addresses returned by the SaaS provider, which ones are most performant and dynamically rearrange the DNS response to favor them, or even remove poorly performing IP addresses altogether.

This can be a critical upgrade in regions where poor peering may result in IP addresses in the same geography not always having quality interconnections.

### Deployment

Deployment of the DNS Everywhere solution is outlined below (from the perspective of the customer (i.e., the company) does). In an embodiment, two steps need to be performed:
1. The customer (i.e., the company) must install a lightweight container or VM (i.e., for the Connector) in their data center. This only needs to be done once, and requires very little resources to function.
2. The customer must point their end user devices to Akamai (that is, to the DNS Everywhere solution) for DNS resolution. This is most often accomplished by a simple DHCP configuration change, or a change in their VPN profile.

### Use Case for remotely deployed DNS Everywhere nodes

The teachings in this document can be extended to another scenario. In this scenario, the branch office is located in a country or geographic area where it is undesirable or impossible to deploy a nearby DNS Everywhere machine. This may be due to local country rules and regulations on Internet, or other reasons.

The way this embodiment works is users in the branch office (or otherwise in an area without DNS Everywhere deployments) are configured to use, as their resolver, a DNS Everywhere node outside of the area. This DNS Everywhere node performs the same split horizon routing as described previously, where enterprise internal domains that are configured are recognized by the DNS Everywhere node get forwarded to the appliance running in the customer datacenter. All public domain queries get routed back into the area, where a public or licensed recursive resolver handles the resolution while also providing the correct geolocation mapping (e.g., for SaaS applications and other web sites).

The benefit of this alternate method is the DNS Everywhere service provider and the enterprise customer do not need to store any private records or run customer software in the restricted geographic area. Without something like this, customers (that is, the companies and their users in the branch offices) face the same geolocation issues. However, it can be much worse because any time a client gets mapped to a web/origin server outside of the area, the latency penalty may be made much worse.

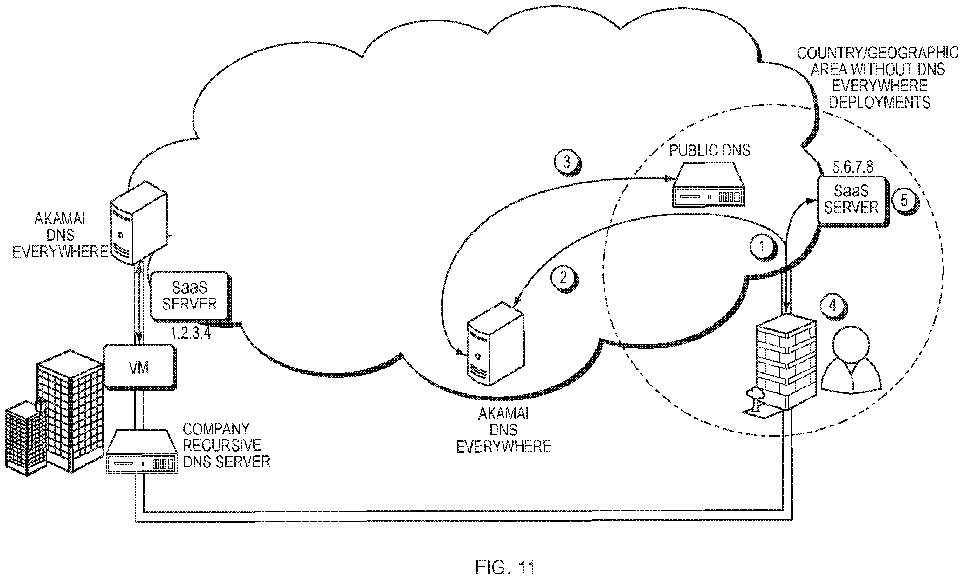

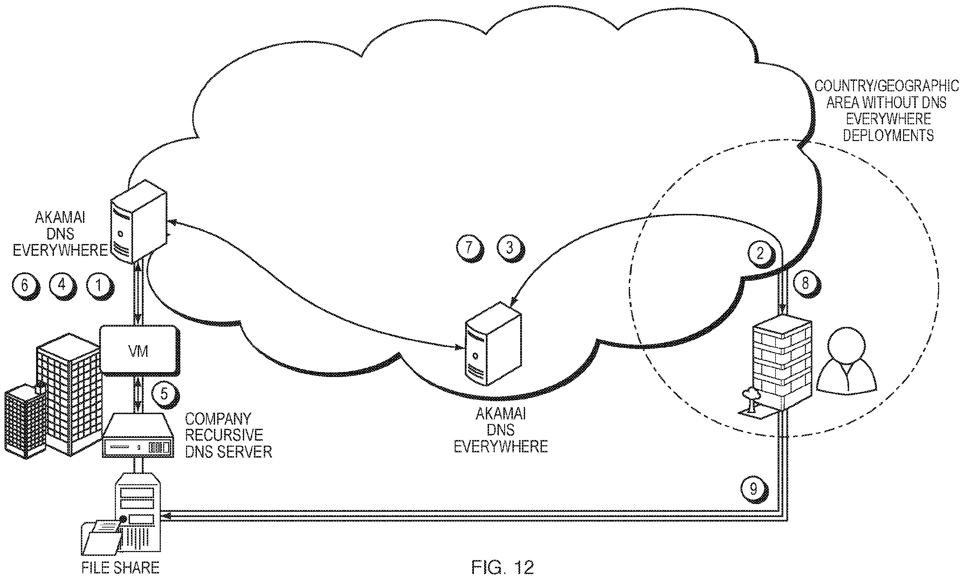

FIGS. 11 and 12 illustrate this embodiment.

First, the external lookup is depicted in FIG. 11. In FIG. 11, the public DNS could be a publicly available DNS or a DNS server made available to DNS Everywhere customers that is specially locally licensed (it may not hold customer configurations). The "public DNS" acts a resolver in this case, i.e., it may need to perform lookups with authoritative servers for the SaaS provider authoritative DNS server, which may be located in the area or not (this process is not shown in FIG. 11 for simplicity of illustration). The public DNS would also be used when the client is trying to resolve domain names for other things than the SaaS provider, e.g., any public website.

As those skilled in the art will appreciate, the steps in FIG. 11 generally correspond to those already described in connection with FIG. 8. In steps 1 and 2, the branch office end user's DNS query is routed to the DNS Everywhere node located outside the area, and that node does the recursive lookup. In this case, as mentioned above, the query is routed to the public/licensed DNS in the area to handle the external domain name lookup. The end user's client device receives back the result of the name lookup at 4 (IP address 5.6.7.8, a nearby server), and then contacts the nearby SaaS server at step 5.

The internal lookup is depicted in FIG. 12. As those skilled in the art will appreciate, the steps in FIG. 12 generally correspond to those already described in connection with FIG. 9. However, the DNS Everywhere node is simply located outside of the area that is nearby the end user.

### DNS Request Types

While certain examples given above have been explained in the context of a DNS request to resolve a hostname (that is, a request for an A or AAAA record, as known in the art), those skilled in the art will recognized that the systems, methods, and techniques presented can be used equally for other known DNS query types, such as MX, SRV, TXT.

It is noted that trademarks appearing herein are the property of their respective owners and used for identification and descriptive purposes only, given the nature of the subject matter at issue, and not to imply endorsement or affiliation in any way.

As an example, when DNS Everywhere (that is, a DNS Everywhere node) queries a SaaS Provider for its closest SaaS servers on behalf of a user in geographic region, the SaaS typically responds with not only one IP address, but the set of all serviceable addresses within that region. Some of these IP addresses reside on networks that might not have great connectivity with the requesting branch office network.

That list of IP addresses returned can display a wide range of latency characteristics (that is, the latency of the network traffic sent to those IP addresses can have a wide range of latency). DNS Everywhere is able to not only allow the SaaS provider to discover the proper geographic region to map to, but can also determine out of the set of all IP addresses returned by the SaaS provider, which ones are most performant and dynamically rearrange the DNS response to favor them, or even remove poorly performing IP addresses altogether.

This can be a critical upgrade in regions where poor peering may result in IP addresses in the same geography not always having quality interconnections.

### Deployment

Deployment of the DNS Everywhere solution is outlined below (from the perspective of the customer (i.e., the company) does). In an embodiment, two steps need to be performed:
1. The customer (i.e., the company) must install a lightweight container or VM (i.e., for the Connector) in their data center. This only needs to be done once, and requires very little resources to function.
2. The customer must point their end user devices to Akamai (that is, to the DNS Everywhere solution) for DNS resolution. This is most often accomplished by a simple DHCP configuration change, or a change in their VPN profile.

### Use Case for remotely deployed DNS Everywhere nodes

The teachings in this document can be extended to another scenario. In this scenario, the branch office is located in a country or geographic area where it is undesirable or impossible to deploy a nearby DNS Everywhere machine. This may be due to local country rules and regulations on Internet, or other reasons.

The way this embodiment works is users in the branch office (or otherwise in an area without DNS Everywhere deployments) are configured to use, as their resolver, a DNS Everywhere node outside of the area. This DNS Everywhere node performs the same split horizon routing as described previously, where enterprise internal domains that are configured are recognized by the DNS Everywhere node get forwarded to the appliance running in the customer datacenter. All public domain queries get routed back into the area, where a public or licensed recursive resolver handles the resolution while also providing the correct geolocation mapping (e.g., for SaaS applications and other web sites).

The benefit of this alternate method is the DNS Everywhere service provider and the enterprise customer do not need to store any private records or run customer software in the restricted geographic area. Without something like this, customers (that is, the companies and their users in the branch offices) face the same geolocation issues. However, it can be much worse because any time a client gets mapped to a web/origin server outside of the area, the latency penalty may be made much worse.

FIGS. 11 and 12 illustrate this embodiment.

First, the external lookup is depicted in FIG. 11. In FIG. 11, the public DNS could be a publicly available DNS or a DNS server made available to DNS Everywhere customers that is specially locally licensed (it may not hold customer configurations). The "public DNS" acts a resolver in this case, i.e., it may need to perform lookups with authoritative servers for the SaaS provider authoritative DNS server, which may be located in the area or not (this process is not shown in FIG. 11 for simplicity of illustration). The public DNS would also be used when the client is trying to resolve domain names for other things than the SaaS provider, e.g., any public website.

As those skilled in the art will appreciate, the steps in FIG. 11 generally correspond to those already described in connection with FIG. 8. In steps 1 and 2, the branch office end user's DNS query is routed to the DNS Everywhere node located outside the area, and that node does the recursive lookup. In this case, as mentioned above, the query is routed to the public/licensed DNS in the area to handle the external domain name lookup. The end user's client device receives back the result of the name lookup at 4 (IP address 5.6.7.8, a nearby server), and then contacts the nearby SaaS server at step 5.

The internal lookup is depicted in FIG. 12. As those skilled in the art will appreciate, the steps in FIG. 12 generally correspond to those already described in connection with FIG. 9. However, the DNS Everywhere node is simply located outside of the area that is nearby the end user.

### DNS Request Types

While certain examples given above have been explained in the context of a DNS request to resolve a hostname (that is, a request for an A or AAAA record, as known in the art), those skilled in the art will recognized that the systems, methods, and techniques presented can be used equally for other known DNS query types, such as MX, SRV, TXT.

It is noted that trademarks appearing herein are the property of their respective owners and used for identification and descriptive purposes only, given the nature of the subject matter at issue, and not to imply endorsement or affiliation in any way.

## Claims

1. A system, comprising:
an enterprise network comprising an enterprise DNS server and an end user client, the end user client being located remote from the enterprise DNS server;
the end user client being configured to direct a DNS request, the DNS request being a request to resolve a hostname, directly onto the public Internet to a DNS service platform operated by a service provider on behalf of the enterprise, the DNS service platform comprising a plurality of platform DNS servers distributed around the Internet;
a first platform DNS server configured to receive the DNS requests at an IP address;
upon a determination that the hostname is an internal hostname of the enterprise, based on an internal configuration at the first platform DNS server, the first platform DNS server is configured to forward the end user client's DNS request to a second platform DNS server located closer to the enterprise DNS server;
the second platform DNS server configured to relay the end user client's DNS request to the enterprise DNS server via a secure tunnel through the enterprise network perimeter, the secure tunnel having been established between the second platform DNS server and machine executing software, the software provided by the service provider to the enterprise for the purpose of establishing the secure tunnel;
the enterprise DNS server configured to receive the end user client's DNS request, which is for internal hostname, and generate a DNS answer, which is returned to the end user client via the secure tunnel, the second platform DNS server, and the first platform DNS server.

2. The system of claim 1, where the first platform DNS server is configured to authenticate/ authorize the end user client before forwarding the DNS request.

3. The system of claim 1, wherein any particular platform DNS server is configured to receive the DNS request at the IP address and the IP address is an AnyCast IP address.

4. The system of claim 1, wherein the internal hostname corresponds to an enterprise file server or enterprise application, or wherein the network enterprise perimeter comprises a firewall.

5. The system of claim 1, wherein the first platform DNS server is selected to be located outside of a given geographic area where the end user client is located.

6. The system of claim 5, wherein the given geographic area comprises a given country.

7. The system of claim 1, wherein said closeness is measured by any of geographic and network distance.

## Patentansprüche

1. Ein System, das Folgendes beinhaltet:
ein Unternehmensnetzwerk, das einen Unternehmens-DNS-Server und einen Endbenutzer-Client beinhaltet, wobei sich der Endbenutzer-Client entfernt von dem Unternehmens-DNS-Server befindet;
wobei der Endbenutzer-Client konfiguriert ist, um eine DNS-Anfrage, bei der es sich um eine Anfrage zur Auflösung eines Hostnamens handelt, direkt in das öffentliche Internet zu einer DNS-Dienstplattform zu leiten, die von einem Dienstanbieter im Namen des Unternehmens betrieben wird, wobei die DNS-Dienstplattform eine Vielzahl von Plattform-DNS-Servern umfasst, die über das Internet verteilt sind;
einen ersten Plattform-DNS-Server, der konfiguriert ist, um die DNS-Anfragen an einer IP-Adresse zu empfangen;
bei einer Bestimmung, dass der Hostname ein interner Hostname des Unternehmens ist, basierend auf einer internen Konfiguration an dem ersten Plattform-DNS-Server, ist der erste Plattform-DNS-Server konfiguriert, um die DNS-Anfrage des Endbenutzer-Clients an einen zweiten Plattform-DNS-Server weiterzuleiten, der sich näher an dem Unternehmens-DNS-Server befindet;
wobei der zweite Plattform-DNS-Server konfiguriert ist, um die DNS-Anfrage des Endbenutzer-Clients über einen sicheren Tunnel durch den Unternehmensnetzwerkperimeter an den Unternehmens-DNS-Server weiterzureichen, wobei der sichere Tunnel zwischen dem zweiten Plattform-DNS-Server und einer Maschine, die Software ausführt, eingerichtet wurde, wobei die Software von dem Dienstanbieter dem Unternehmen zum Zweck der Einrichtung des sicheren Tunnels bereitgestellt wird;
wobei der Unternehmens-DNS-Server konfiguriert ist, um die DNS-Anfrage des Endbenutzer-Clients, nach einem internen Hostnamen, zu empfangen und eine DNS-Antwort zu erzeugen, die über den sicheren Tunnel, den zweiten Plattform-DNS-Server und den ersten Plattform-DNS-Server an den Endbenutzer-Client zurückgegeben wird.

2. System gemäß Anspruch 1, wobei der erste Plattform-DNS-Server konfiguriert ist, um den Endbenutzer-Client zu authentifizieren/autorisieren, bevor die DNS-Anfrage weitergeleitet wird.

3. System gemäß Anspruch 1, wobei ein jeweiliger Plattform-DNS-Server konfiguriert ist, um die DNS-Anfrage an der IP-Adresse zu empfangen, und die IP-Adresse eine AnyCast-IP-Adresse ist.

4. System gemäß Anspruch 1, wobei der interne Hostname einem Unternehmensdateiserver oder einer Unternehmensanwendung entspricht oder wobei der Unternehmensnetzwerkperimeter eine Firewall beinhaltet.

5. System gemäß Anspruch 1, wobei der erste Plattform-DNS-Server so ausgewählt ist, dass er sich außerhalb eines gegebenen geografischen Bereichs befindet, in dem sich der Endbenutzer-Client befindet.

6. System gemäß Anspruch 5, wobei der gegebene geografische Bereich ein gegebenes Land beinhaltet.

7. System gemäß Anspruch 1, wobei die Nähe durch eine von einer geografischen Entfernung oder einer Netzwerk-Entfernung bemessen wird.

## Revendications

1. Un système comprenant :
un réseau d'entreprise comprenant un serveur DNS d'entreprise et un client utilisateur final, le client utilisateur final étant situé à distance du serveur DNS d'entreprise ;
le client utilisateur final étant configuré pour diriger une requête DNS, la requête DNS étant une requête pour résoudre un nom d'hôte, directement sur l'Internet public vers une plateforme de service DNS exploitée par un fournisseur de services pour le compte de l'entreprise, la plateforme de service DNS comprenant une pluralité de serveurs DNS de plateforme répartis sur Internet ;
un premier serveur DNS de plateforme configuré pour recevoir les requêtes DNS à une adresse IP ;
lorsqu'il est déterminé que le nom d'hôte est un nom d'hôte interne de l'entreprise, sur la base d'une configuration interne au niveau du premier serveur DNS de plateforme, le premier serveur DNS de plateforme est configuré pour transmettre la requête DNS du client utilisateur final à un deuxième serveur DNS de plateforme situé plus près du serveur DNS d'entreprise ;
le deuxième serveur DNS de plateforme étant configuré pour relayer la requête DNS du client utilisateur final au serveur DNS d'entreprise via un tunnel sécurisé à travers le périmètre du réseau d'entreprise, le tunnel sécurisé ayant été établi entre le deuxième serveur DNS de plateforme et un logiciel d'exécution de machine, le logiciel étant fourni par le fournisseur de services à l'entreprise dans le but de la mise en place du tunnel sécurisé ;
le serveur DNS d'entreprise étant configuré pour recevoir la requête DNS du client utilisateur final, qui concerne le nom d'hôte interne, et générer une réponse DNS, qui est renvoyée au client utilisateur final via le tunnel sécurisé, le deuxième serveur DNS de plateforme et le premier serveur DNS de plateforme.

2. Le système de la revendication 1, où le premier serveur DNS de plateforme est configuré pour authentifier/autoriser le client utilisateur final avant de transmettre la requête DNS.

3. Le système de la revendication 1, dans lequel n'importe quel serveur DNS de plateforme particulier est configuré pour recevoir la requête DNS à l'adresse IP et l'adresse IP est une adresse IP AnyCast.

4. Le système de la revendication 1, dans lequel le nom d'hôte interne correspond à un serveur de fichiers d'entreprise ou à une application d'entreprise, ou dans lequel le périmètre du réseau d'entreprise comprend un pare-feu.

5. Le système de la revendication 1, dans lequel le premier serveur DNS de plateforme est sélectionné de façon à être situé en dehors d'une zone géographique donnée où est situé le client utilisateur final.

6. Le système de la revendication 5, dans lequel la zone géographique donnée comprend un pays donné.

7. Le système de la revendication 1, dans lequel ladite proximité est mesurée par l'une quelconque des distances géographiques et de réseau.
